# EUROPEAN PATENT SPECIFICATION

(11) **EP 2 975 838 B1**
(45) Date of publication and mention of the grant of the patent: **25.03.2020**
(21) Application number: 15177086.4
(22) Date of filing: 16.07.2015
(51) Int. Cl.: H04N 5/232, G06F 3/048

(54) **IMAGE SHOOTING PARAMETER ADJUSTMENT METHOD AND DEVICE**
VERFAHREN UND -VORRICHTUNG ZUR ANPASSUNG VON BILDAUFNAHMEPARAMETER
PROCÉDÉ ET DISPOSITIF DE RÉGLAGE DE PARAMÈTRE DE CAPTURE D'IMAGE

(30) Priority: 18.07.2014 CN 201410345545
(43) Date of publication of application: 20.01.2016
(73) Proprietor: Xiaomi Inc., Beijing 100085 (CN)
(72) Inventor: GUO, Chong, 100085 BEIJING (CN); ZHU, Ling, 100085 BEIJING (CN); CHEN, Xiaolong, 100085 BEIJING (CN); HU, Xiaowei, 100085 BEIJING (CN); ZHANG, Haipo, 100085 BEIJING (CN)
(74) Representative: Cabinet Beau de Loménie

(56) References cited:
- EP-A1- 3 151 531
- US-A1- 2009 015 703
- US-A1- 2009 153 527
- US-A1- 2010 156 941
- US-A1- 2011 019 058
- US-A1- 2011 109 581
- US-A1- 2013 063 645

## Description

### TECHNICAL FIELD

The present disclosure generally relates to the field of image processing, and more particularly, to a shooting parameter adjustment method and a device thereof.

### BACKGROUND

Electronic equipment such as smart mobile phones, Tablet PCs and the like have gradually become people's necessities of life. Shooting pictures by using these electronic equipment is the most frequently-used function for users.

In the process of shooting, different from a majority of digital single lens reflexes which use mechanical devices to adjust shooting parameters, above electronic equipment generally use a touchscreen to adjust shooting parameters. Namely, after starting shooting, electronic equipment may display a finder frame on a touchscreen, and display a plurality of buttons at one side of the finder frame, for example, a shooting mode selection button, an exposure control button, and a white balance control button, etc. When users desire to adjust a certain shooting parameter, they may click on a corresponding button to trigger a display of a corresponding drop-down menu, and then select or adjust the shooting parameter from the drop-down menu.

In the process of realization of the present disclosure, at least following disadvantages are found in the foregoing implementation: users need to select an operation twice or thrice when they adjust a shooting parameter by means of buttons on a touchscreen until a mobile terminal displays a drop-down menu corresponding to the shooting parameter, only after which can users start to adjust the shooting parameter. This make the whole adjusting process have excessive operation hierarchies and not efficient.

Document US 2011/019058 describes a device in which the nature of a user's touch on a touch screen controls display of different types of graphics allowing shooting parameters to be adjusted. For example, a curved swipe of the user's finger at the right-hand side of the touchscreen causes concentric circles to be displayed over a guide image that is being displayed on the touchscreen. Then a sliding touch on one circle allows focus to be adjusted, and a sliding touch on another circle adjusts aperture.

Document US 2010/156941 describes a device which displays a guide image on a touchscreen and then displays a drop-down menu when a long touch is detected on a foreground object, or on the background, of the guide image. The drop-down menu allows shooting parameters of the foreground object (or background) to be adjusted.

Document US 2009/015703 describes a device in which a user can obtain auto-focus and shooting of a picture by making a short touch on a touchscreen that is displaying a guide image. However, if the user wishes to adjust shooting parameters the user makes a long touch on the touchscreen to obtain display of a menu window allowing shooting parameters to be adjusted.

Document US 2009/153527 describes a user interface graphic that generally resembles a clock face and is displayed on a touchscreen to allow a user to adjust multiple parameters. A long touch on one sector of the graphic causes a particular parameter to be selected, and a short sweeping touch clockwise or anti-clockwise causes the value of the parameter to be adjusted.

Document US 2011/109581 describes a device which allows zooming to be controlled by detecting a circular motion of a user's finger on a touchscreen that is displaying a guide image. A zoom-in operation is performed relative to the center of an arc drawn by the user's finger. In the foregoing documents, efficiency is low because multiple operations at locations distributed over a touchscreen are necessary in order to adjust shooting parameters and perform focusing before conducting shooting based on the set shooting parameters.

### SUMMARY

In order to solve problems of excessive operation hierarchies and low efficiency in the adjusting process in related technologies when users adjust shooting parameters by means of buttons on a touchscreen, the embodiments of the present disclosure provide a shooting parameter adjustment method and a device thereof. The technical solution is as below:
According to the first aspect, the invention relates to a shooting parameter adjustment method as defined in the appended claims 1-9.

According to a second aspect, the invention relates to a shooting parameter adjustment device as defined in the appended claims 10-11.

In one particular embodiment, the steps of the shooting parameter adjustment method are determined by computer program instructions.

Consequently, according to a third aspect, the invention is also directed to a computer program as defined in the appended claim 12.

This program can use any programming language and take the form of source code, object code or a code intermediate between source code and object code, such as a partially compiled form, or any other desirable form.

The invention is also directed to a recording medium as defined in the appended claim 13.
the recording medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The technical solution according to the embodiments of the present disclosure may have the following beneficial effects:
By displaying, by taking a click position of the click signal as a center, a slide adjusting control corresponding to a shooting parameter; receiving a sliding touch signal acting on the slide adjusting control; adjusting the shooting parameter according to the sliding touch signal, it is solved the problems of excessive operation hierarchies and low efficiency in the adjusting process when users adjust shooting parameters by means of buttons on a touchscreen; reaching an effect that users may directly adjust shooting parameters on the slide adjusting control by using a sliding touch signal, leading to the whole process of operation simple and fast as well as high efficient.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1A is a flow chart showing a shooting parameter adjustment method according to an exemplary embodiment.
Fig. 1B is an interface diagram of a shooting parameter adjustment method according to the embodiment as shown in Fig. 1A in a possible implementation manner.
Fig. 1C is an interface diagram of a slide adjusting control according to the embodiment as shown in Fig. 1A in different implementations.
Fig. 2A is a flow chart showing a shooting parameter adjustment method according to another exemplary embodiment.
Fig. 2B is an interface diagram of a rotator adjusting control according to the embodiment as shown in Fig. 2A.
Fig. 2C is an interface diagram showing the embodiment according to Fig. 2A, in which a rotator adjusting control is adjusted by means of clockwise slide signal.
Fig. 2D is an interface diagram showing the embodiment according to Fig. 2A, in which a rotator adjusting control is adjusted by means of clockwise slide signal.
Fig. 3A is a flow chart showing a shooting parameter adjustment method according to another exemplary embodiment.
Fig. 3B is an interface diagram of a rotator adjusting control according to the embodiment as shown in Fig. 3A.
Fig. 3C is an interface diagram of the embodiment according to Fig. 3A, showing the switch of display of a rotator adjusting control.
Fig. 4A is a flow chart showing a shooting parameter adjustment method according to another exemplary embodiment.
Fig. 4B is an interface diagram of simultaneously displaying n rotator adjusting controls according to the embodiment as shown in Fig. 4A.
Fig. 4C is another interface diagram of simultaneously displaying n rotator adjusting controls according to the embodiment as shown in Fig. 4A.
Fig. 4D is an interface diagram showing a change of a display of a slide adjusting control after automatic focusing according to further an exemplary embodiment.
Fig. 4E is an interface diagram showing a slide adjusting control according to a further exemplary embodiment.
Fig. 4F is an interface diagram showing a slide adjusting control according to another exemplary embodiment.
Fig. 5 is a block diagram showing a shooting parameter adjustment device according to an exemplary embodiment.
Fig. 6 is a block diagram showing a shooting parameter adjustment device according to another exemplary embodiment.
Fig. 7 is a block diagram showing a shooting parameter adjustment device according to another exemplary embodiment.
Fig. 8 is a block diagram showing a shooting parameter adjustment device according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The shooting parameter adjustment method according to the present disclosure may be applied to electronic equipment provided with a shooting performance and a touchscreen. The electronic equipment herein may be a mobile phone, a tablet computer, an ebook reader, a MP3 (Moving Picture Experts Group Audio Layer III) player, a MP4 (Moving Picture Experts Group Audio Layer IV) player, a laptop computer, a desktop computer and the like.

In the process of realization of the present disclosure, it is found that when users use a smart mobile phone or a tablet PC to shoot pictures, few users will adjust shooting parameters such as an exposure compensation value and a white balance because of excessive operation hierarchies, and a majority of users may directly use a point-and-shoot mode (or headless mode). On the other hand, when a touchscreen is used to display a finder frame, the most commonly used operation for users is to determine a focused position by using a click signal in the finder frame. For this reason, an "organic combination" (or integration) of the process of adjusting a shooting parameter and the process of determining a focused position by using a click signal is made for realizing a convenient and shortcut shooting parameter adjustment method. Please refer to following embodiments:

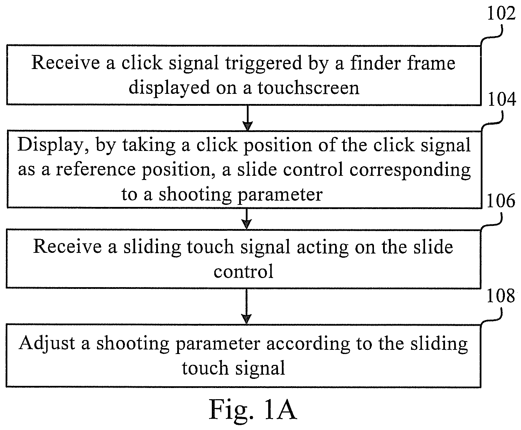

Fig. 1A is a flow chart showing a shooting parameter adjustment method according to an exemplary embodiment. The shooting parameter adjustment method according to the embodiment may be applied to electronic equipment provided with a shooting performance and a touchscreen, comprising following steps:
In Step 102, a click signal triggered by a finder frame displayed on a touchscreen is received.
In Step 104, a slide adjusting control (or slide control) corresponding to a shooting parameter is displayed by taking a click position of the click signal as a reference position.

The slide adjusting control usually is a rotator adjusting control, a display shape of which is any one of a complete circle, an incomplete circle, a complete ring and an incomplete ring.

In Step 106, a sliding touch signal acting on the slide adjusting control is received.

In Step 108, a shooting parameter is adjusted according to the sliding touch signal.

In conclusion, the shooting parameter adjustment method according to the embodiment comprises: displaying, by taking a click position of the click signal as a reference position, a slide adjusting control corresponding to a shooting parameter; receiving a sliding touch signal acting on the slide adjusting control; adjusting the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

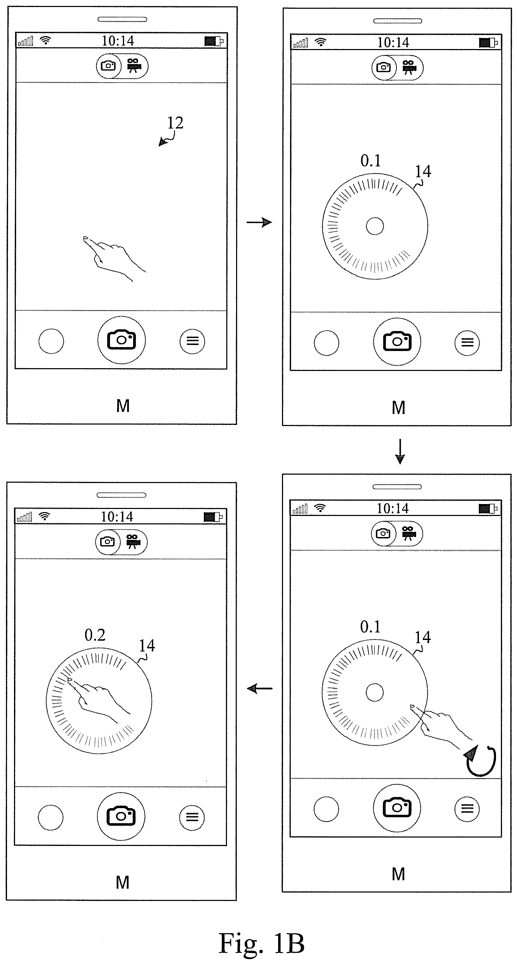

In an exemplary example, referring to Fig. 1B, in a shooting process, users send, in a finder frame 12, a click signal to a mobile terminal; and the mobile terminal displays, by taking a click position of the click signal as a reference position, a slide adjusting control 14 corresponding to a shooting parameter "exposure compensation"; the slide adjusting control 14 is a rotator adjusting control shaped like a circle and taking the click position as a circle center. Users may adjust the rotator adjusting control by means of a clockwise slide signal or an anticlockwise slide signal, thus adjusting a corresponding shooting parameter, for example, increasing an exposure compensation value from 0.1 to 0.2 by means of a clockwise slide signal.

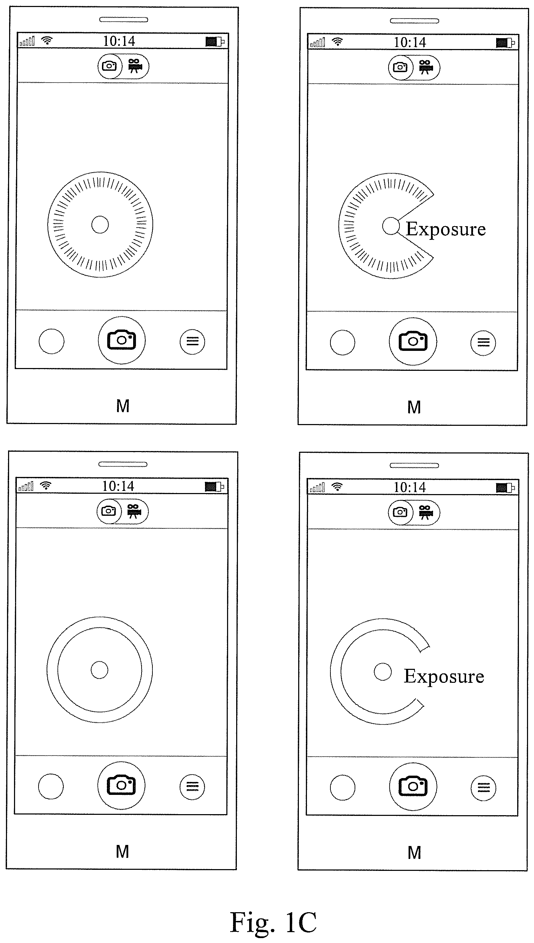

It should be explained that the slide adjusting control 14 is a control configured to control by taking the click position as a center and by means of sliding touch signal of a curve type. The display shape of the slide adjusting control 14 includes but not limited to: a complete circle, an incomplete circle, a complete ring or an incomplete ring, as shown successively in Fig. 1C from left to right and from top to bottom. Of course, other shapes are permissible.

It should also be explained that the shooting parameter comprises at least one of an exposure compensation value, a white balance value, ISO (or sensitivity), an aperture value, a focal length and a shutter speed.

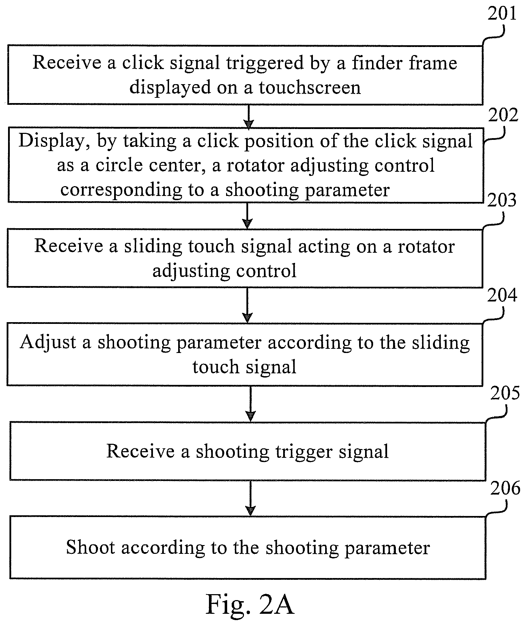

Fig. 2A is a flow chart showing a shooting parameter adjustment method according to another exemplary embodiment. The shooting parameter adjustment method according to the embodiment may be applied to electronic equipment provided with a shooting performance and a touchscreen, comprising following steps:
In Step 201, a click signal triggered by a finder frame displayed on a touchscreen is received.

When users use electronic equipment provided with a shooting performance and a touchscreen for shooting, the electronic equipment may display, on the touchscreen, a finder frame for preview.

Users may trigger a click signal in a finder frame displayed in a touchscreen. Electronic equipment may take a click position of the click signal as a focused position, and automatic focusing may be realizable at the click position if the electronic equipment supports automatic focusing.

In Step 202, a rotator adjusting control corresponding to a shooting parameter is displayed by taking a click position of the click signal as a circle center.

After receiving the click signal, electronic equipment may display, by taking a click position of the click signal as a circle center, a slide adjusting control corresponding to a shooting parameter. The rotator adjusting control may be a control shaped like a complete ring which includes a scale identification corresponding to the shooting parameter.

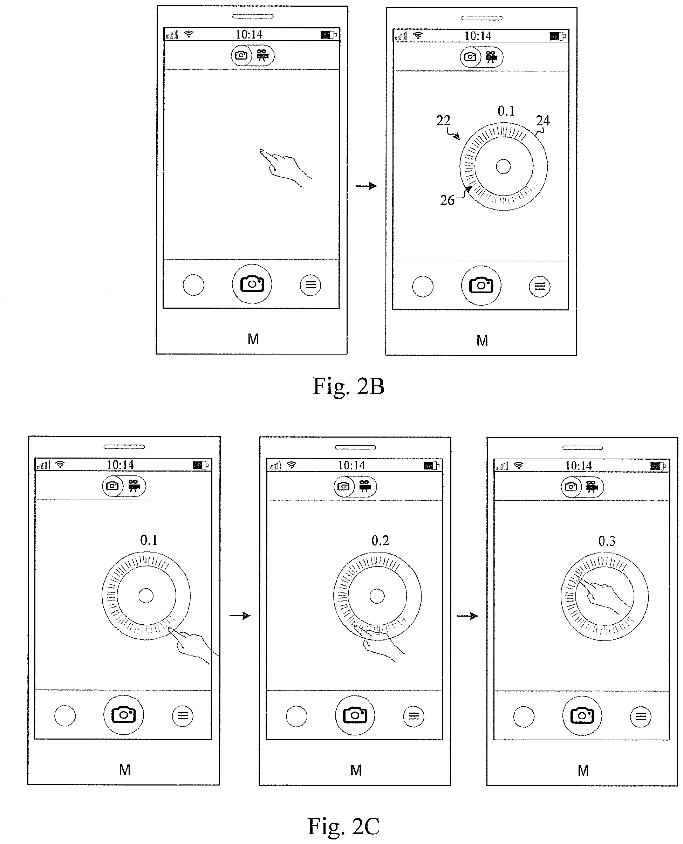

For example, as shown in Fig. 2B, the shooting parameter may be an exposure compensation value, i.e., the rotator adjusting control 22 is used to adjust an exposure compensation value, and the rotator adjusting control 22 comprises a complete ring 24 inside which scale identifications 26 corresponding to different exposure compensation values are equally distributed and arrayed.

In Step 203, a sliding touch signal acting on the rotator adjusting control is received.

Electronic equipment may receive a sliding touch signal triggered by users, which is a sliding touch signal acting on a rotator adjusting control. The sliding touch signal may be either a clockwise slide signal or an anticlockwise slide signal.

In Step 204, a shooting parameter is adjusted according to the sliding touch signal.

On the basis of different sliding touch signals, the Step may be classified into following two cases:
Electronic equipment may magnify the shooting parameter if the sliding touch signal is a clockwise slide signal, the magnification range is in positive correlation relationship to a length of a slide path of the clockwise slide signal.

For example, as shown in Fig. 2C, an exposure compensation value is increased by electronic equipment if the sliding touch signal is a clockwise slide signal; the exposure compensation value is increased from 0.1 to 0.2 if the clockwise slide signal is rotated by 1/4 circle; and the exposure compensation value is increased from 0.1 to 0.3 if the clockwise slide signal is rotated by 1/2 circle.

Electronic equipment may shrink the shooting parameter if the sliding touch signal is an anticlockwise slide signal, the shrinking range is in positive correlation relationship to a length of a slide path of the anticlockwise slide signal.

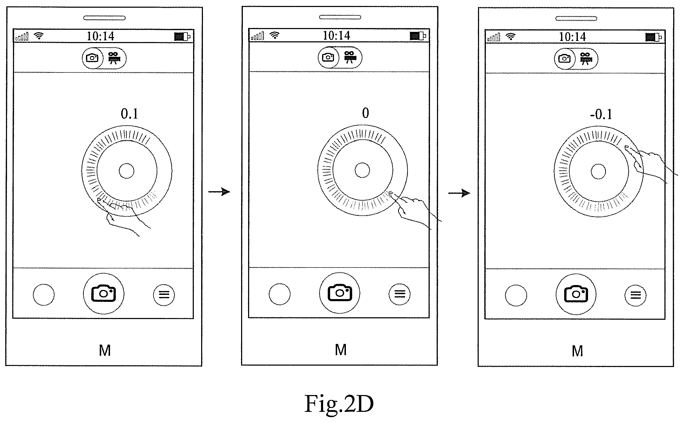

For example, as shown in Fig. 2D, an exposure compensation value is decreased by electronic equipment if the sliding touch signal is an anticlockwise slide signal; the exposure compensation value is decreased from 0.1 to 0 if the anticlockwise slide signal is rotated by 1/4 circle; and the exposure compensation value is decreased from 0.1 to -0.1 if the anticlockwise slide signal is rotated by 1/2 circle.

In a possible implementation, the Step may include following substeps:
1. Detecting whether a sliding velocity of the sliding touch signal is in excess of a preset threshold value.
   After receiving a clockwise slide signal or an anticlockwise slide signal, electronic equipment may further detect whether the sliding velocity of the clockwise slide signal or the anticlockwise slide signal is in excess of a preset threshold value. Namely, whether the clockwise slide signal or the anticlockwise slide signal is a fast slide signal.
2. Adjusting the shooting parameter as a default value if the sliding velocity of the sliding touch signal is in excess of the preset threshold value.

Electronic equipment may reset the shooting parameter as a default value if the sliding velocity of the sliding touch signal is in excess of the preset threshold value, for example, quickly resetting an exposure compensation value as a default value 0.

Obviously, this possible implementation may preset the shooting parameter as an initial default value in case that users fail to reach a desired result by multiple adjustments.

In Step 205, a shooting trigger signal is received.

Upon completion of adjustment of the shooting parameter, electronic equipment may receive a shooting trigger signal triggered by users. The shooting trigger signal may be a signal triggered by users by clicking on a shooting button in a user interface.

In Step 206, the shooting parameter is used as a basis for shooting.

Electronic equipment may conduct a shooting according to the shooting parameter adjusted.

In conclusion, the shooting parameter adjustment method according to the embodiment comprises: displaying, by taking a click position of the click signal as a center, a slide adjusting control corresponding to a shooting parameter; receiving a sliding touch signal acting on the slide adjusting control; adjusting the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

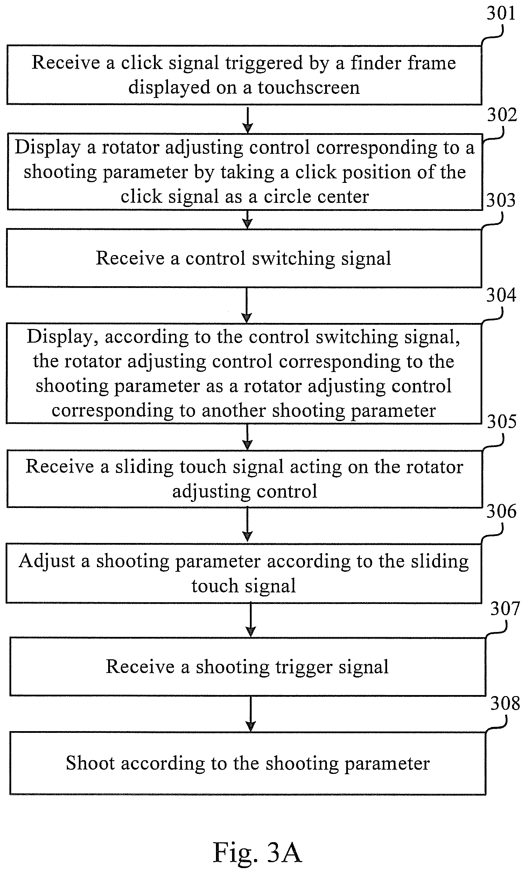

A slide adjusting control in an embodiment as shown in Fig. 2A is configured to adjust one shooting parameter, please refer to the embodiment as shown in Fig. 3A for adjusting a plurality of shooting parameters.

Fig. 3A is a flow chart showing a shooting parameter adjustment method according to another exemplary embodiment. The shooting parameter adjustment method according to the embodiment may be applied to electronic equipment provided with a shooting performance and a touchscreen, comprising following steps:
In Step 301, a click signal triggered by a finder frame displayed on a touchscreen is received.

When users use electronic equipment provided with a shooting performance and a touchscreen for shooting, the electronic equipment may display, on the touchscreen, a finder frame for preview.

Users may trigger a click signal in a finder frame displayed in a touchscreen. Electronic equipment may take a click position of the click signal as a focused position, and automatic focusing may be realizable at the click position if the electronic equipment supports automatic focusing.

In Step 302, a rotator adjusting control corresponding to a shooting parameter is displayed by taking a click position of the click signal as a circle center.

After receiving the click signal, electronic equipment may display, by taking a click position of the click signal as a circle center, a slide adjusting control corresponding to one shooting parameter. The rotator adjusting control may be a control shaped like an incomplete ring which includes a scale identification corresponding to a shooting parameter and the name of the shooting parameter.

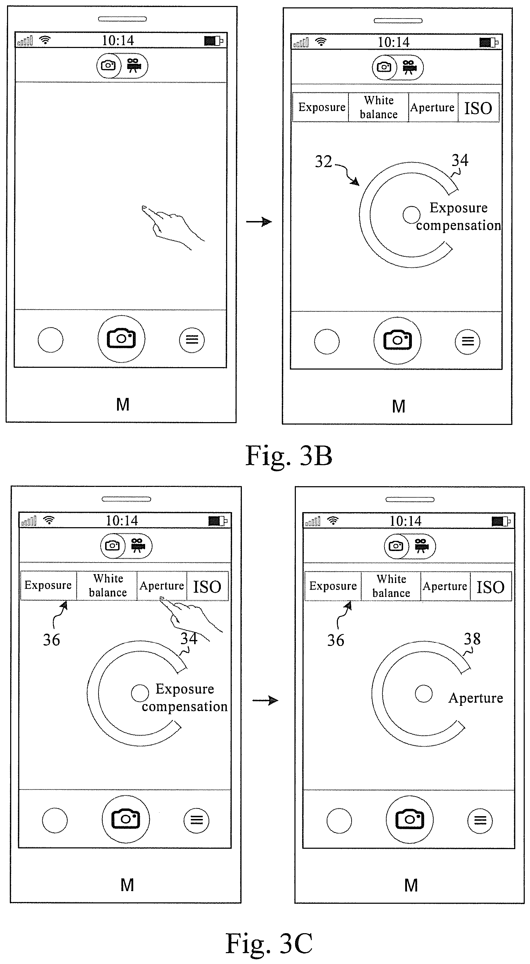

For example, as shown in Fig. 3B, the shooting parameter may be an exposure compensation value, i.e., the rotator adjusting control 32 is used to adjust an exposure compensation value, and the rotator adjusting control 32 comprises an incomplete ring 34 whose missing part has the name of the shooting parameter "exposure compensation".

In Step 303, a control switching signal is received.

Users may send a control switching signal to electronic equipment if the rotator adjusting control currently displayed is not a control corresponding to a shooting parameter which is expected to be adjusted by users.

The control switching signal is predefined by electronic equipment, the trigger form of which is not restricted in the embodiment, it may be a signal triggered by pressing a preset physical button, or a signal triggered by pressing a virtual key displayed on a touchscreen, or a signal triggered by a sliding touch signal in conformity with a predefined slide path, or a signal triggered by a sensor in electronic equipment.

For example, as shown in Fig. 3C, one side of a touchscreen of electronic equipment also displays a plurality of buttons 36, each of which is corresponding to a shooting parameter. After displaying a rotator adjusting control, users may trigger a control switching signal to electronic equipment by clicking on one of buttons 36 corresponding to the shooting parameter if they expect to adjust another shooting parameter.

In Step 304, a rotator adjusting control corresponding to the shooting parameter is displayed as a rotator adjusting control corresponding to another shooting parameter according to the control switching signal.

Electronic equipment may switch, according to the control switching signal, the rotator adjusting control corresponding to the shooting parameter to display a rotator adjusting control corresponding to another shooting parameter.

For example, as shown in Fig. 3C, if users click on an "aperture" button 36, electronic equipment may switch displaying a rotator adjusting control corresponding to the current shooting parameter "exposure compensation value" as a rotator adjusting control 38 corresponding to another shooting parameter.

In Step 305, a sliding touch signal acting on the rotator adjusting control is received.

Electronic equipment receives a sliding touch signal triggered by users, which is a sliding touch signal acting on a rotator adjusting control. The sliding touch signal may be either a clockwise slide signal or an anticlockwise slide signal.

In Step 306, a shooting parameter is adjusted according to the sliding touch signal.

On the basis of different sliding touch signals, the Step may be classified into following two cases:
Electronic equipment may magnify the shooting parameter if the sliding touch signal is a clockwise slide signal, the magnification range being in positive correlation relationship to a length of a slide path of the clockwise slide signal.
Electronic equipment may shrink the shooting parameter if the sliding touch signal is an anticlockwise slide signal, the shrinking range being in positive correlation relationship to a length of a slide path of the anticlockwise slide signal.

As another possible implementation, electronic equipment may shrink a shooting parameter by means of a clockwise slide signal, and amplify a shooting parameter by means of an anticlockwise slide signal.

As further a possible implementation, the Step may include following substeps:
1. Detecting whether a sliding velocity of the sliding touch signal is in excess of a preset threshold value.
   After receiving a clockwise slide signal or an anticlockwise slide signal, electronic equipment may further detect whether the sliding velocity of the clockwise slide signal or the anticlockwise slide signal is in excess of a preset threshold value. Namely, whether the clockwise slide signal or the anticlockwise slide signal is a fast slide signal.
2. Adjusting the shooting parameter as a default value if the sliding velocity of the sliding touch signal is in excess of the preset threshold value.

Electronic equipment may reset the shooting parameter as a default value if the sliding velocity of the sliding touch signal is in excess of the preset threshold value, for example, quickly resetting an exposure compensation value as a default value 0.

It is clear that this possible implementation may preset the shooting parameter as an initial default value in case that users fail to reach a desired result by multiple adjustments.

In Step 307, a shooting trigger signal is received.

Upon completion of adjustment of shooting parameters, electronic equipment may receive a shooting trigger signal triggered by users. The shooting trigger signal may be a signal triggered by users by clicking on a shooting button in a user interface.

In Step 308, shooting parameters are used as a basis for shooting.

Electronic equipment conducts a shooting according to shooting parameters adjusted.

In conclusion, the shooting parameter adjustment method according to the embodiment comprises: displaying, by taking a click position of the click signal as a reference position, a slide adjusting control corresponding to a shooting parameter; receiving a sliding touch signal acting on the slide adjusting control; adjusting the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

The shooting parameter adjustment method according to the embodiment also provides a solution for switching, on the basis of a control switching signal, rotator adjusting controls corresponding to different shooting parameters so that users may adjust different shooting parameters by means of the rotator adjusting controls, thus further improving the operation efficiency.

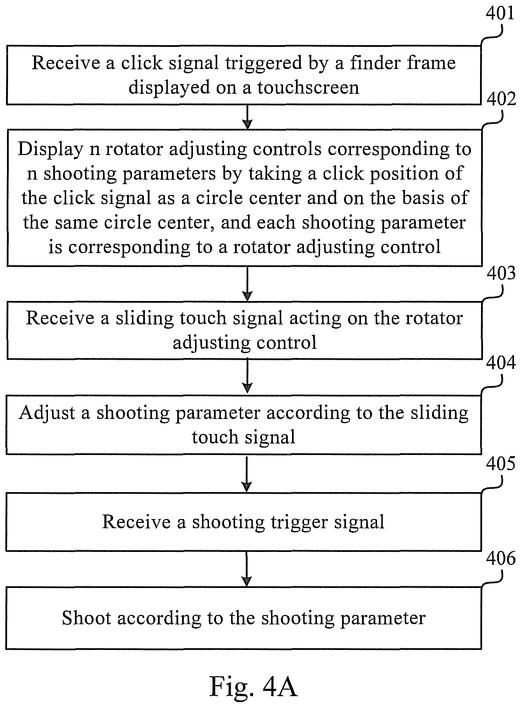

A slide adjusting control in an embodiment as shown in Fig. 2A is configured to adjust one shooting parameter, please refer to embodiments as shown in Fig. 4A for adjusting a plurality of shooting parameters.

Fig. 4A is a flow chart showing a shooting parameter adjustment method according to another exemplary embodiment. The shooting parameter adjustment method according to the embodiment may be applied to electronic equipment provided with a shooting performance and a touchscreen, comprising following steps:
In Step 401, a click signal triggered by a finder frame displayed on a touchscreen is received.

When users use electronic equipment provided with a shooting performance and a touchscreen for shooting, the electronic equipment may display, on the touchscreen, a finder frame for preview.

Users may trigger a click signal in a finder frame displayed in a touchscreen. Electronic equipment may take a click position of the click signal as a focused position, and automatic focusing may be realizable at the click position if the electronic equipment supports automatic focusing.

In Step 402, n rotator adjusting controls corresponding to n shooting parameters are displayed by taking a click position of the click signal as a circle center and on the basis of the same circle center, and each shooting parameter is corresponding to a rotator adjusting control.

After receiving the click signal, electronic equipment may display, by taking a click position of the click signal as a circle center, n rotator adjusting controls corresponding to n shooting parameters; wherein, the display shape of the rotator adjusting control may be any one of a complete circle, an incomplete circle, a complete ring and an incomplete ring, n≥2.

As a possible implementation, electronic equipment may display, in the shape of concentric circles with the same circle center but different radiuses, n rotator adjusting controls corresponding to n shooting parameters.

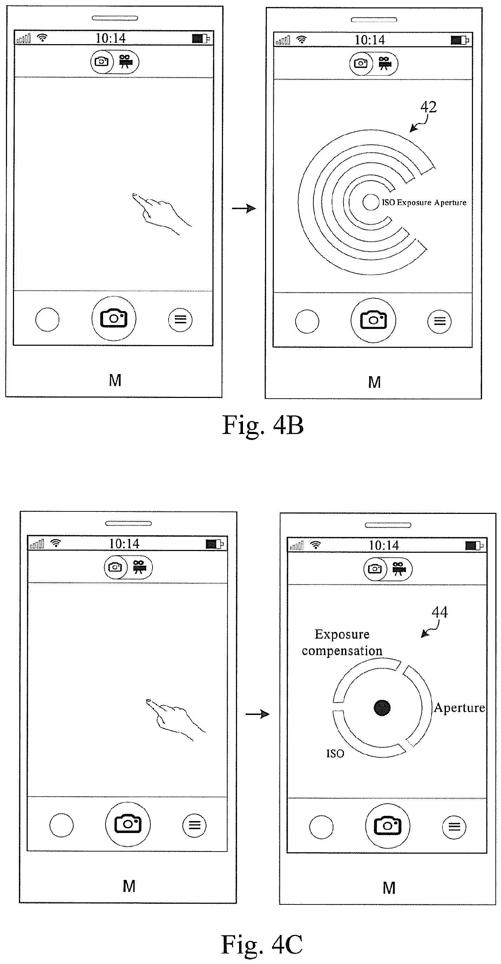

For example, as shown in Fig. 4B, electronic equipment displays, in the shape of concentric circles with the same circle center but different radiuses, three rotator adjusting controls 42 corresponding to three shooting parameters; each of the rotator adjusting controls 42 is an incomplete ring, one of the rotator adjusting controls 42 with the minimum radius is corresponding to a shooting parameter "ISO", one of the rotator adjusting controls 42 with the medium radius is corresponding to a shooting parameter "aperture", one of the rotator adjusting controls 42 with the maximum radius is corresponding to a shooting parameter "exposure compensation value".

As another possible implementation, electronic equipment may display, in different radian positions on the same ring positioned on the basis of the circle center, the n rotator adjusting controls.

For example, as shown in Fig. 4C, electronic equipment displays, in different radian positions on the ring positioned on the basis of the circle center, three rotator adjusting controls 44 respectively corresponding to three shooting parameters; each of the rotator adjusting controls 44 is an incomplete ring, and occupies one third of a complete ring. Wherein, one of the rotator adjusting controls 44 is corresponding to a shooting parameter "ISO", another one the rotator adjusting controls 44 is corresponding to a shooting parameter "aperture", and the last one of rotator adjusting controls 44 is corresponding to a shooting parameter "exposure compensation".

Namely, electronic equipment may simultaneously display a plurality of rotator adjusting controls corresponding to a plurality of shooting parameters.

In Step 403, a sliding touch signal acting on the rotator adjusting control is received.

Electronic equipment receives a sliding touch signal triggered by users, which is a sliding touch signal acting on one rotator adjusting control of a plurality of rotator adjusting controls. The sliding touch signal may be either a clockwise slide signal or an anticlockwise slide signal.

In Step 404, a shooting parameter is adjusted according to the sliding touch signal.

On the basis of different sliding touch signals, the Step may be classified into following two cases:
Electronic equipment may magnify the shooting parameter if the sliding touch signal is a clockwise slide signal, the magnification range being in positive correlation relationship to a length of a slide path of the clockwise slide signal.
Electronic equipment may shrink the shooting parameter if the sliding touch signal is an anticlockwise slide signal, the shrinking range being in positive correlation relationship to a length of a slide path of the anticlockwise slide signal.

As another possible implementation, electronic equipment may shrink a shooting parameter by means of a clockwise slide signal, and amplify a shooting parameter by means of an anticlockwise slide signal.

As a further possible implementation, the Step may include following substeps:
1. Detecting whether a sliding velocity of the sliding touch signal is in excess of a preset threshold value.
   After receiving a clockwise slide signal or an anticlockwise slide signal, electronic equipment may further detect whether the sliding velocity of the clockwise slide signal or the anticlockwise slide signal is in excess of a preset threshold value. Namely, whether the clockwise slide signal or the anticlockwise slide signal is a fast slide signal.
2. Adjusting the shooting parameter as a default value if the sliding velocity of the sliding touch signal is in excess of the preset threshold value.

Electronic equipment may reset the shooting parameter as a default value if the sliding velocity of the sliding touch signal is in excess of the preset threshold value, for example, quickly resetting an exposure compensation value as a default value 0.

It is clear that this possible implementation may preset the shooting parameter as an initial default value in case that users fail to reach a desired result by multiple adjustments.

In Step 405, a shooting trigger signal is received.

Upon completion of adjustment of shooting parameters, electronic equipment may receive a shooting trigger signal triggered by users. The shooting trigger signal may be a signal triggered by users by clicking on a shooting button in a user interface.

In Step 406, the shooting parameter is used as a basis for shooting.

Electronic equipment conducts a shooting according to shooting parameters adjusted.

In conclusion, the shooting parameter adjustment method according to the embodiment comprises: displaying, by taking a click position of the click signal as a center, a slide adjusting control corresponding to a shooting parameter; receiving a sliding touch signal acting on the slide adjusting control; adjusting the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

The shooting parameter adjustment method according to the embodiment also provides a solution for showing, on the basis of the same circle center, n rotator adjusting controls corresponding to n shooting parameters so that users may adjust a plurality of shooting parameters by means of the rotator adjusting controls, thus further improving the operation efficiency.

It is clear that, in the above solutions, electronic equipment may organically combine the operation of user's selecting a focusing point by clicking and the operation of user's adjusting a shooting parameter so that users may conveniently adjust a shooting parameter by means of a slide adjusting control after selecting a focusing point without redundant operations, thus improving usability and convenience for users in term of adjusting a shooting parameter. Compared with related technologies in which entering into an adjustment menu of a shooting parameter needs multiple operations, as users need to select a focusing point by clicking in a majority of shooting process, in the present disclosure, the operation hierarchy of displaying a slide adjusting control may be close to nil, thus significantly improving users' operation efficiency and facilitating users to adjust a shooting parameter, and thereby further improving image quality.

As a possible implementation, in above embodiments, after receiving a click signal from users, electronic equipment may take a click position of the click signal as a focused position for automatic focusing. Optionally, upon completion of automatic focusing, electronic equipment may also change the display of a slide adjusting control, and the slide adjusting control after change is configured to signify completion of automatic focusing. The change of the display may be: to change such a first element displayed in a central location of a slide adjusting control as a second element.

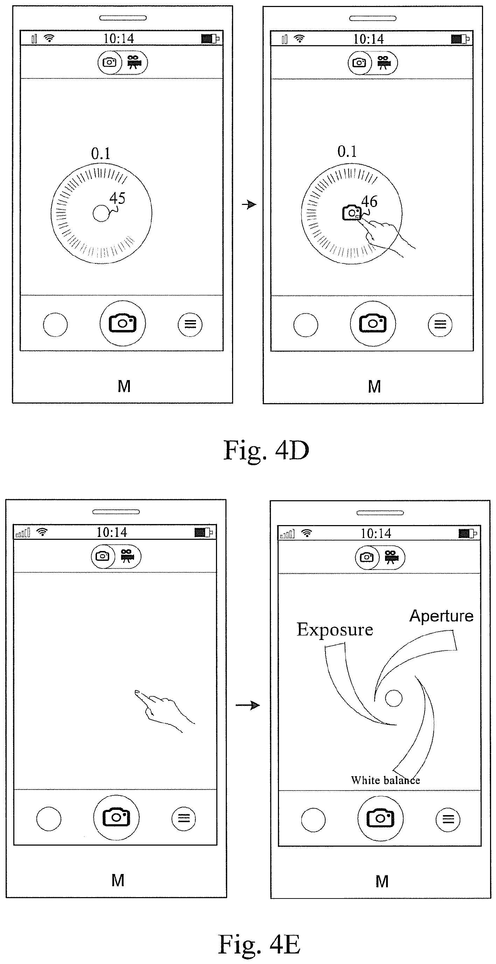

For example, as shown in Fig. 4D, upon completion of automatic focusing, electronic equipment may change the display of such a "circle" 45 slide adjusting controldisplayed in a central location of a slide adjusting control as a "camera button" 46, thus signifying completion of automatic focusing. Hereafter, users may adjust a shooting parameter by means of a slide adjusting control.

This possible implementation may serve as an alternative step of the foregoing Steps 205-206, or Steps 307-308, or Steps 405-406. Embodiments as shown in the foregoing Fig. 2A, Fig. 3A and Fig. 4A may also comprise following steps:
1. Receiving, upon completion of automatic focusing, a click signal acting on the slide adjusting control.
   In need of shooting pictures, users may either trigger shooting by clicking on a shooting button at the bottom of a user interface, or trigger shooting by applying a click signal to a slide adjusting control.
   For example, as shown in Fig. 4D, users may trigger shooting by clicking on a "camera button" 46 on a slide adjusting control.
   Correspondingly, electronic equipment receives a click signal acting on the slide adjusting control.
2. Conducting a shooting according to the shooting parameter after the click signal is received.

Electronic equipment may conduct a shooting according to the shooting parameter after the click signal is received.

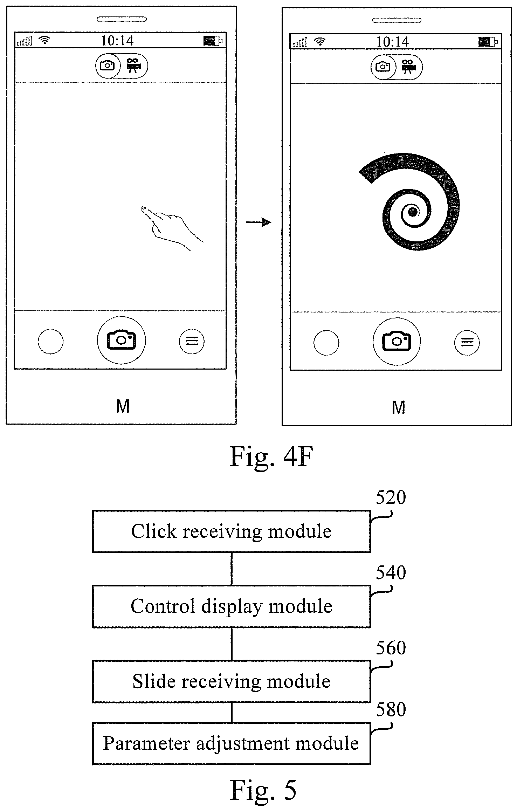

It should also be explained that the display shape of a slide adjusting control is not restricted. The slide adjusting control is a control configured to control by taking the click position as a center and by means of a sliding touch signal of a curve type, for example, the slide adjusting control may also be an adjusting control displayed as an arc, as shown in Fig. 4E. For another example, the slide adjusting control also may be an adjusting control displayed as a helical line, as shown in Fig. 4F.

The following is the embodiment of the device in the present disclosure, which may be configured to execute the embodiment of the method in the present disclosure. Please refer to the embodiment of the method in the present disclosure with regard to undisclosed details about the embodiment of the device in the present disclosure.

Fig. 5 is a block diagram of a shooting parameter adjustment device according to an exemplary embodiment; the shooting parameter adjustment device may be realized to become the electronic equipment in part or in whole by means of software and hardware or combination of both. The shooting parameter adjustment device may comprise:
a click receiving module 520, configured to receive a click signal triggered by a finder frame displayed on a touchscreen;
a control display module 540, configured to display, by taking a click position of the click signal as a reference position, a slide adjusting control corresponding to a shooting parameter;
a slide receiving module 560, configured to receive a sliding touch signal acting on a slide adjusting control; and
a parameter adjustment module 580, configured to adjust a shooting parameter according to a sliding touch signal.

In conclusion, the shooting parameter adjustment device according to the embodiment may: display, by taking a click position of the click signal as a reference position, a slide adjusting control corresponding to a shooting parameter; receive a sliding touch signal acting on the slide adjusting control; and adjust the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

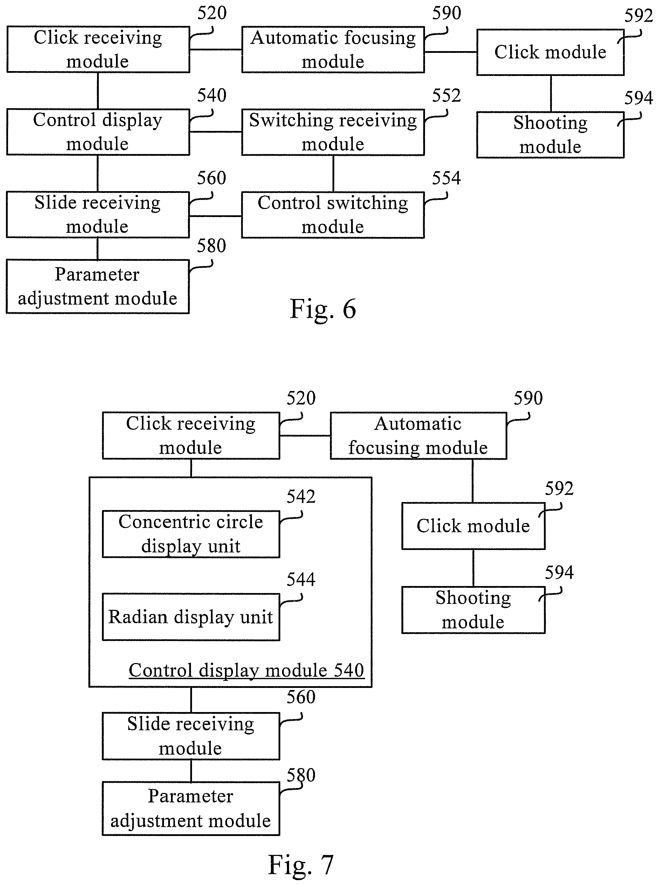

Fig. 6 is a block diagram of a shooting parameter adjustment device according to an exemplary embodiment; the shooting parameter adjustment device may be realized to become the electronic equipment in part or in whole by means of software and hardware or combination of both. The shooting parameter adjustment device may comprise:
a click receiving module 520, configured to receive a click signal triggered by a finder frame displayed on a touchscreen;
a control display module 540, configured to display, by taking a click position of the click signal as a reference position, a slide adjusting control corresponding to a shooting parameter;
a slide receiving module 560, configured to receive a sliding touch signal acting on a slide adjusting control; and
a parameter adjustment module 580, configured to adjust a shooting parameter according to a sliding touch signal.

In a possible implementation, the control display module 540 is configured to display, by taking a click position of the click signal as a circle center, a rotator adjusting control corresponding to a shooting parameter; and a display shape of the rotator adjusting control may be any one of a complete circle, an incomplete circle, a complete ring and an incomplete ring.

Optionally, the shooting parameter adjustment device also comprises:
a switching receiving module 552, configured to receive a control switching signal; and
a control switching module 554, configured to switch displaying, according to a control switching signal, a rotator adjusting control corresponding to a shooting parameter as a rotator adjusting control corresponding to another shooting parameter.

Optionally, the parameter adjustment module 580 comprises:
a first regulating unit, configured to magnify the shooting parameter if a sliding touch signal is a clockwise slide signal, the magnification range being in positive correlation relationship to a length of a slide path of the clockwise slide signal; and a second regulating unit, configured to shrink a shooting parameter if the sliding touch signal is an anticlockwise slide signal, the shrinking range being in positive correlation relationship to a length of a slide path of the anticlockwise slide signal;
   or,
a third regulating unit, configured to shrink a shooting parameter if a sliding touch signal is a clockwise slide signal, the shrinking range being in positive correlation relationship to a length of a slide path of the clockwise slide signal; and a fourth regulating unit, configured to magnify a shooting parameter if a sliding touch signal is an anticlockwise slide signal, the magnification range being in positive correlation relationship to a length of a slide path of the anticlockwise slide signal.

Optionally, the parameter adjustment module 580 also comprises:
a velocity detection unit, configured to detect whether a sliding velocity of a sliding touch signal is in excess of a preset threshold value; and
a parameter reset unit, configured to reset a shooting parameter as a default value if the sliding velocity of a sliding touch signal is in excess of the preset threshold value.

Optionally, the rotator adjusting control includes a scale identification corresponding to a shooting parameter.

Optionally, a shooting parameter comprises at least one of an exposure compensation value, a white balance value, ISO, an aperture value, a focal length and a shutter speed.

Optionally, the device also comprises: an automatic focusing module 590;
the automatic focusing module 590 is configured to automatically focus by taking a click position of the click signal as a focused position.

Optionally, the device also comprises: a change display module (not shown in Figs.)

The change display module is configured to change the display of a slide adjusting control after automatic focusing is completed by the automatic focusing module 590. The slide adjusting control after change display is configured to signify completion of automatic focusing.

Optionally, the device also comprises:
a click module 592, configured to receive, upon completion of automatic focusing by the automatic focusing module 590, a click signal acting on a slide adjusting control; and
a shooting module 594, configured to conduct a shooting according to a shooting parameter after a click signal is received by the click module 592.

In conclusion, the shooting parameter adjustment device according to the embodiment may: display, by taking a click position of the click signal as a reference position, a slide adjusting control corresponding to a shooting parameter; receive a sliding touch signal acting on the slide adjusting control; and adjust the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

The shooting parameter adjustment device according to the embodiment also provides a solution for switching, on the basis of a control switching signal, rotator adjusting controls corresponding to different shooting parameters so that users may adjust different shooting parameters by means of the rotator adjusting controls, thus further improving the operation efficiency.

Fig. 7 is a block diagram of a shooting parameter adjustment device according to an exemplary embodiment; the shooting parameter adjustment device may be realized to become the electronic equipment in part or in whole by means of software and hardware or combination of both. The shooting parameter adjustment device may comprise:
a click receiving module 520, configured to receive a click signal triggered by a finder frame displayed on a touchscreen;
a control display module 540, configured to display, by taking a click position of a click signal as a reference position, a slide adjusting control corresponding to a shooting parameter;
a slide receiving module 560, configured to receive a sliding touch signal acting on a slide adjusting control; and
a parameter adjustment module 580, configured to adjust a shooting parameter according to a sliding touch signal.

In a possible implementation, the control display module 540 is configured to take a click position of the click signal as a circle center, and display, n rotator adjusting controls corresponding to n shooting parameters on the basis of the same circle center; each shooting parameter is corresponding to a rotator adjusting control, and a display shape of the rotator adjusting control may be any one of a complete circle, an incomplete circle, a complete ring and an incomplete ring, n≥2.

Optionally, the control display module 540 comprises: an concentric circle display unit 542 or a radian display unit 544.

The concentric circle display unit 542 is configured to display, in the shape of concentric circles with the same circle center but different radiuses, n rotator adjusting controls corresponding to n shooting parameters; or
the radian display unit 544 is configured to display, in different radian positions on the same ring positioned on the basis of the circle center, n rotator adjusting controls when the display shapes of the n rotator adjusting controls are incomplete circles or incomplete rings.

Optionally, the parameter adjustment module 580 comprises:
a first regulating unit, configured to magnify a shooting parameter if a sliding touch signal is a clockwise slide signal, the magnification range being in positive correlation relationship to a length of a slide path of the clockwise slide signal; and a second regulating unit, configured to shrink a shooting parameter if a sliding touch signal is an anticlockwise slide signal, the shrinking range being in positive correlation relationship to a length of a slide path of the anticlockwise slide signal;
   or,
a third regulating unit, configured to shrink a shooting parameter if a sliding touch signal is a clockwise slide signal, the shrinking range being in positive correlation relationship to a length of a slide path of the clockwise slide signal; and a fourth regulating unit, configured to magnify a shooting parameter if a sliding touch signal is an anticlockwise slide signal, the magnification range being in positive correlation relationship to a length of a slide path of the anticlockwise slide signal.

Optionally, the parameter adjustment module 580 also comprises:
a velocity detection unit, configured to detect whether a sliding velocity of a sliding touch signal is in excess of a preset threshold value; and
a parameter reset unit, configured to reset a shooting parameter as a default value if the sliding velocity of a sliding touch signal is in excess of the preset threshold value.

Optionally, the rotator adjusting control includes a scale identification corresponding to the shooting parameter.

Optionally, the shooting parameter comprises at least one of an exposure compensation value, a white balance value, ISO, an aperture value, a focal length and a shutter speed.

Optionally, the device also comprises: an automatic focusing module 590;
the automatic focusing module 590 is configured to focus by taking a click position of a click signal as a focused position.

Optionally, the device also comprises: a change display module (not shown in Figs.)

The change display module is configured to change the display of a slide adjusting control after automatic focusing by the automatic focusing module 590. The slide adjusting control after the change of the display is configured to signify completion of automatic focusing.

Optionally, the device also comprises:
a click module 592, configured to receive, upon completion of automatic focusing by the automatic focusing module 590, a click signal acting on a slide adjusting control; and
a shooting module 594, configured to conduct a shooting according to a shooting parameter after a click signal is received by the click module 592.

In conclusion, the shooting parameter adjustment device according to the embodiment comprises: displaying, by taking a click position of the click signal as a reference position, a slide adjusting control corresponding to a shooting parameter; receiving a sliding touch signal acting on the slide adjusting control; adjusting the shooting parameter according to the sliding touch signal; thus solving the problems of excessive operation hierarchies and low efficiency in the adjusting process when users adjust shooting parameters by means of buttons on a touchscreen; and reaching an effect that users may directly adjust shooting parameters on the slide adjusting control by using a sliding touch signal, leading to the whole process of operation simple and fast as well as high efficient.

The shooting parameter adjustment device according to the embodiment also provides a solution for showing, on the basis of the same circle center, n rotator adjusting controls corresponding to n shooting parameters so that users may adjust a plurality of shooting parameters by means of the rotator adjusting control, thus further improving the operation efficiency.

With regard to the device in the above embodiment, detailed description of specific manners for conducting operation of modules has been made in the embodiment related to the methods, no detailed illustration will be made herein.

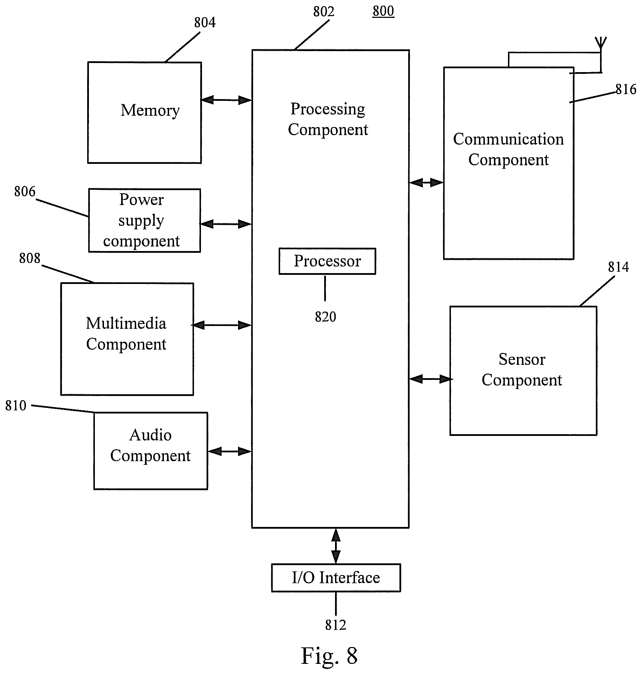

Fig. 8 is a block diagram showing a shooting parameter adjustment device 800 according to an exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig.8, the device 800 may include one or a plurality of components as below: a processor component 802, a memory 804, a power supply component 806, a multimedia component 808, an audio component 810, an input/output (I/O) interface 812, a sensor component 814 and a communication component 816.

The processor component 802 usually controls the overall operation of the device 800, for example, display, telephone call, data communication, and operation associated with camera operation and record operation. The processor component 802 may include one or a plurality of processors 820 for executing instructions so as to complete steps of above method in part or in whole. In addition, the processor component 802 may include one or a plurality of modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include any application program or approach directive for operation of the device 800, including contact data, phonebook data, message, picture and video, etc. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the device 800. The power supply component 806 may include a power management system, one or a plurality of power supplies, and other components associated with generation, management and power distribution of the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface for the processor component 802 and peripheral interface modules, the peripheral interface modules may be a keyboard, a click wheel and buttons, etc. These buttons may include but not limited to: home button, volume button, start button and locking button.

The sensor component 814 includes one or a plurality of sensors for providing the device 800 with state evaluation from all aspects. For example, the sensor component 814 may detect the on/off state of the device 800, relative positioning of components, for example, the components are the displayer and keypads of the device 800; the sensor component 814 also may detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, for example, WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 800 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, above instructions may be executed by the processors 820 of the device 800 so as to achieve the above methods. For example, the non-transitory computer-readable storage medium may be ROM, random access memory (RAM), CD-ROM, magnetic tape, floppy disk and optical data storage device, etc.

A non-transitory computer-readable storage medium, wherein instructions in the storage medium are executed by processors of the device 800 so as to execute the shooting parameter adjustment method according to above embodiments.

## Claims

1. A method for adjusting a shooting parameter, comprising:
receiving (102) a click signal triggered by a touch on a finder frame displayed on a touchscreen;
in response to said click signal, displaying (104) a slide adjusting control corresponding to a shooting parameter;
receiving (106) a sliding touch signal indicative of a sliding touch of a curve type acting on the slide adjusting control; and
adjusting (108) the shooting parameter according to the sliding touch signal, wherein the shooting parameter comprises at least one of an exposure compensation value, a white balance value, ISO, an aperture value, a focal length and a shutter speed
**characterized in that**:
the displaying comprises displaying a slide adjusting control taking the click position as a center of the slide adjusting control; and
focusing is performed automatically at the click position of the click signal on the finder frame.

2. The method of claim 1, wherein the step of displaying comprises:
displaying (202), by taking the click position of the click signal as a circle center, a rotator adjusting control corresponding to the shooting parameter; a display shape of the rotator adjusting control being any one of a complete circle, an incomplete circle, a complete ring and an incomplete ring.

3. The method of claim 2, wherein the method further comprises:
receiving (303) a control switching signal; and
switching, according to the control switching signal, the rotator adjusting control corresponding to the shooting parameter to display a rotator adjusting control corresponding to another shooting parameter.

4. The method of any one of claims 1 to 3, wherein the step of displaying comprises:
taking the click position of the click signal as a circle center, and displaying, n rotator adjusting controls corresponding to n shooting parameters on the basis of the same circle center; each of the n shooting parameter being corresponding to a rotator adjusting control, and a display shape of the rotator adjusting control being any one of a complete circle, an incomplete circle, a complete ring and an incomplete ring, n≥2.

5. The method of claim 4, wherein the displaying, n rotator adjusting controls corresponding to n shooting parameters on the basis of the same circle center comprises:
displaying (402), in the shape of concentric circles with the same circle center but different radiuses, n rotator adjusting controls corresponding to n shooting parameters; or
displaying, in different radian positions on a same ring positioned on the basis of the circle center, the n rotator adjusting controls.

6. The method of any one of claims 2-5, wherein the step (204) of adjusting the shooting parameter according to the sliding touch signal comprises:
magnifying the shooting parameter if the sliding touch signal is a clockwise slide signal, the magnification range being in positive correlation relationship to a length of a slide path of the clockwise slide signal; and shrinking the shooting parameter if the sliding touch signal is an anticlockwise slide signal, the shrinking range being in positive correlation relationship to a length of a slide path of the anticlockwise slide signal;
or,
shrinking the shooting parameter if the sliding touch signal is a clockwise slide signal, the shrinking range being in positive correlation relationship to a length of a slide path of the clockwise slide signal; and magnifying the shooting parameter if the sliding touch signal is an anticlockwise slide signal, the magnification range being in positive correlation relationship to a length of a slide path of the anticlockwise slide signal.

7. The method of any one of claims 2-6, wherein the step (204) of adjusting the shooting parameter according to the sliding touch signal comprises:
detecting whether a sliding velocity of the sliding touch signal is in excess of a preset threshold value; and
adjusting the shooting parameter as a default value if the sliding velocity of the sliding touch signal is in excess of the preset threshold value.

8. The method of any one of claims 2-7, wherein the rotator adjusting control comprises a scale identification corresponding to the shooting parameter.

9. The method of claim 1, wherein the method further comprises:
receiving, upon completion of automatic focusing, a click signal acting on the slide adjusting control; and
conducting a shooting according to the shooting parameter after the click signal is received by the click module.

10. A device for adjusting a shooting parameter, comprising:
a click receiving module (520), configured to receive a click signal triggered by a touch on a finder frame displayed on a touchscreen;
a control display module (540), configured to display, in response to said click signal, a slide adjusting control corresponding to a shooting parameter;
a slide receiving module (560), configured to receive a sliding touch signal indicative of a sliding touch of a curve type acting on the slide adjusting control; and
a parameter adjustment module (580), configured to adjust the shooting parameter according to the sliding touch signal, wherein the shooting parameter comprises at least one of an exposure compensation value, a white balance value, ISO, an aperture value, a focal length and a shutter speed
**characterized in that**:
the control display module (540) is configured to display a slide adjusting control taking the click position as a center of the slide adjusting control; and
there is further provided an automatic focusing module (590) configured to automatically focus at the click position of the click signal on the finder frame.

11. The shooting-parameter adjusting device of claim 10, comprising a processor (802); and
a memory (804) configured to store instructions executable by the processor.

12. A computer program including instructions for executing the steps of a shooting parameter adjustment method according to any one of claims 1 to 9 when said program is executed by a computer of the device of claim 10.

13. A recording medium readable by a computer and having recorded thereon the computer program of claim 12.

## Patentansprüche

1. Verfahren zur Einstellung eines Aufnahmeparameters, umfassend:
Empfangen (102) eines Klicksignals, das durch eine Berührung auf einem Sucherrahmen ausgelöst wurde, der auf einem Berührungsbildschirm angezeigt wird,
als Reaktion auf das Klicksignal Anzeigen (104) einer Gleiteinstellungssteuerung, die einem Aufnahmeparameter entspricht,
Empfangen (106) eines Gleitberührungssignals, das auf eine Gleitberührung eines Kurventyps hindeutet und auf die Gleiteinstellungssteuerung einwirkt und
Einstellen (108) des Aufnahmeparameters gemäß dem Gleitberührungssignal, wobei der Aufnahmeparameter mindestens eines von einem Belichtungskorrekturwert, einem Weißabgleichwert, ISO, einem Blendenwert, einer Brennweite und einer Verschlusszeit umfasst,
**dadurch gekennzeichnet, dass**:
das Anzeigen ein Anzeigen einer Gleiteinstellungssteuerung umfasst, wobei die Klickposition als eine Mitte der Gleiteinstellungssteuerung genommen wird, und
ein Fokussieren automatisch an der Klickposition des Klicksignals auf dem Sucherrahmen durchgeführt wird.

2. Verfahren nach Anspruch 1, wobei der Schritt des Anzeigens umfasst:
Anzeigen (202), durch Nehmen der Klickposition des Klicksignals als eine Kreismitte, einer Rotatoreinstellungssteuerung, die dem Aufnahmeparameter entspricht, wobei eine Anzeigeform der Rotatoreinstellungssteuerung eine beliebige von einem vollständigen Kreis, einem unvollständigen Kreis, einem vollständigen Ring und einem unvollständigen Ring ist.

3. Verfahren nach Anspruch 2, wobei das Verfahren ferner umfasst:
Empfangen (303) eines Steuerungsumschaltsignals und
Umschalten der Rotatoreinstellungssteuerung, die dem Aufnahmeparameter entspricht, gemäß dem Steuerungsumschaltsignal, um eine Rotatoreinstellungssteuerung anzuzeigen, die einem anderen Aufnahmeparameter entspricht.

4. Verfahren nach einem der Ansprüche 1 bis 3, wobei der Schritt des Anzeigens umfasst:
Nehmen der Klickposition des Klicksignals als eine Kreismitte und Anzeigen von n Rotatoreinstellungssteuerungen, die n Aufnahmeparametern entsprechen, auf der Basis derselben Kreismitte, wobei jeder der n Aufnahmeparameter einer Rotatoreinstellungssteuerung entspricht und eine Anzeigeform der Rotatoreinstellungssteuerung eine beliebige von einem vollständigen Kreis, einem unvollständigen Kreis, einem vollständigen Ring und einem unvollständigen Ring ist, wobei n ≥ 2.

5. Verfahren nach Anspruch 4, wobei das Anzeigen von n Rotatoreinstellungssteuerungen, die n Aufnahmeparametern entsprechen, auf der Basis derselben Kreismitte umfasst:
Anzeigen (402) von n Rotatoreinstellungssteuerungen, die n Aufnahmeparametern entsprechen, in der Form von konzentrischen Kreisen mit derselben Kreismitte, jedoch unterschiedlichen Radien, oder
Anzeigen der n Rotatoreinstellungssteuerungen in unterschiedlichen Radiantenpositionen auf demselben Ring, die auf der Basis der Kreismitte positioniert sind.

6. Verfahren nach einem der Ansprüche 2 - 5, wobei der Schritt (204) des Einstellens des Aufnahmeparameters gemäß dem Gleitberührungssignal umfasst:
Vergrößern des Aufnahmeparameters, wenn das Gleitberührungssignal ein rechtsdrehendes Gleitsignal ist, wobei der Vergrößerungsbereich in einer positiven Korrelationsbeziehung zu einer Länge eines Gleitwegs des rechtsdrehenden Gleitsignals steht, und Schrumpfen des Aufnahmeparameters, wenn das Gleitberührungssignal ein linksdrehendes Gleitsignal ist, wobei der Schrumpfungsbereich in einer positiven Korrelationsbeziehung zu einer Länge eines Gleitwegs des linksdrehenden Gleitsignals steht,
oder
Schrumpfen des Aufnahmeparameters, wenn das Gleitberührungssignal ein rechtsdrehendes Gleitsignal ist, wobei der Schrumpfungsbereich in einer positiven Korrelationsbeziehung zu einer Länge eines Gleitwegs des rechtsdrehenden Gleitsignals steht, und Vergrößern des Aufnahmeparameters, wenn das Gleitberührungssignal ein linksdrehendes Gleitsignal ist, wobei der Vergrößerungsbereich in einer positiven Korrelationsbeziehung zu einer Länge eines Gleitwegs des linksdrehenden Gleitsignals steht.

7. Verfahren nach einem der Ansprüche 2 - 6, wobei der Schritt (204) des Einstellens des Aufnahmeparameters gemäß dem Gleitberührungssignal umfasst:
Erkennen, ob eine Gleitgeschwindigkeit des Gleitberührungssignals über einen voreingestellten Grenzwert hinausgeht, und
Einstellen des Aufnahmeparameters als einen Standardwert, wenn die Gleitgeschwindigkeit des Gleitberührungssignals über den voreingestellten Grenzwert hinausgeht.

8. Verfahren nach einem der Ansprüche 2 - 7, wobei die Rotatoreinstellungssteuerung eine Maßstabsidentifikation umfasst, die dem Aufnahmeparameter entspricht.

9. Verfahren nach Anspruch 1, wobei das Verfahren ferner umfasst:
nach Abschluss einer automatischen Fokussierung Empfangen eines Klicksignals, das auf die Gleiteinstellungssteuerung einwirkt, und
Vornehmen einer Aufnahme gemäß dem Aufnahmeparameter, nachdem das Klicksignal von dem Klickmodul empfangen wurde.

10. Vorrichtung zur Einstellung eines Aufnahmeparameters, umfassend:
ein Klickempfangsmodul (520), das dazu ausgestaltet ist, ein Klicksignal zu empfangen, das durch eine Berührung auf einem Sucherrahmen ausgelöst wurde, der auf einem Berührungsbildschirm angezeigt wird,
ein Steuerungsanzeigemodul (540), das dazu ausgestaltet ist, als Reaktion auf das Klicksignal eine Gleiteinstellungssteuerung anzuzeigen, die einem Aufnahmeparameter entspricht,
ein Gleitempfangsmodul (560), das dazu ausgestaltet ist, ein Gleitberührungssignal zu empfangen, das auf eine Gleitberührung eines Kurventyps hindeutet, die auf die Gleiteinstellungssteuerung einwirkt, und
ein Parametereinstellungsmodul (580), das dazu ausgestaltet ist, den Aufnahmeparameter gemäß dem Gleitberührungssignal einzustellen, wobei der Aufnahmeparameter mindestens eines von einem Belichtungskorrekturwert, einem Weißabgleichwert, ISO, einem Blendenwert, einer Brennweite und einer Verschlusszeit umfasst,
**dadurch gekennzeichnet, dass**:
das Steuerungsanzeigemodul (540) dazu ausgestaltet ist, eine Gleiteinstellungssteuerung anzuzeigen, wobei die Klickposition als eine Mitte der Gleiteinstellungssteuerung genommen wird, und
ferner ein Autofokussierungsmodul (590) bereitgestellt ist, das dazu ausgestaltet ist, automatisch an der Klickposition des Klicksignals auf dem Sucherrahmen zu fokussieren.

11. Aufnahmeparameter-Einstellungsvorrichtung nach Anspruch 10, umfassend:
einen Prozessor (802) und
einen Speicher (804), der dazu ausgestaltet ist, Anweisungen zu speichern, die von dem Prozessor ausgeführt werden können.

12. Computerprogramm, das Anweisungen zum Ausführen der Schritte eines Aufnahmeparameter-Einstellungsverfahrens nach einem der Ansprüche 1 bis 9 beinhaltet, wenn das Programm von einem Computer der Vorrichtung nach Anspruch 10 ausgeführt wird.

13. Aufzeichnungsmedium, das von einem Computer gelesen werden kann und auf dem das Computerprogramm nach Anspruch 12 aufgezeichnet ist.

## Revendications

1. Procédé d'ajustement d'un paramètre de prise de vue, comprenant les étapes ci-dessous consistant à :
recevoir (102) un signal de clic déclenché par un effleurement sur un cadre de visée affiché sur un écran tactile ;
en réponse audit signal de clic, afficher (104) une commande d'ajustement de glissement correspondant à un paramètre de prise de vue ;
recevoir (106) un signal d'effleurement glissant indicatif d'un effleurement glissant de type courbe agissant sur la commande d'ajustement de glissement ; et
ajuster (108) le paramètre de prise de vue selon le signal d'effleurement glissant, dans lequel le paramètre de prise de vue comprend au moins l'une parmi une valeur de compensation d'exposition, une valeur de balance des blancs, une valeur ISO, une valeur d'ouverture, une distance focale et une vitesse d'obturation ;
**caractérisé en ce que** :
l'étape d'affichage consiste à afficher une commande d'ajustement de glissement en prenant la position de clic comme centre de la commande d'ajustement de glissement ; et
une mise au point est mise en œuvre automatiquement à la position de clic du signal de clic sur le cadre de visée.

2. Procédé selon la revendication 1, dans lequel l'étape d'affichage comprend l'étape ci-dessous consistant à :
afficher (202), en prenant la position de clic du signal de clic comme centre de cercle, une commande d'ajustement de rotateur correspondant au paramètre de prise de vue ; dans lequel une forme d'affichage de la commande d'ajustement de rotateur correspond à l'un quelconque parmi un cercle complet, un cercle incomplet, un anneau complet et un anneau incomplet.

3. Procédé selon la revendication 2, dans lequel le procédé comprend en outre les étapes ci-dessous consistant à :
recevoir (303) un signal de commutation de commande ; et
commuter, selon le signal de commutation de commande, la commande d'ajustement de rotateur correspondant au paramètre de prise de vue, en vue d'afficher une commande d'ajustement de rotateur correspondant à un autre paramètre de prise de vue.

4. Procédé selon l'une quelconque des revendications 1 à 3, dans lequel l'étape d'affichage comprend l'étape ci-dessous consistant à :
prendre la position de clic du signal de clic comme centre de cercle, et afficher « n » commandes d'ajustement de rotateur correspondant à « n » paramètres de prise de vue, sur la base du même centre de cercle ; dans lequel chacun des « n » paramètres de prise de vue correspond à une commande d'ajustement de rotateur, et une forme d'affichage de la commande d'ajustement de rotateur correspond à l'un quelconque parmi un cercle complet, un cercle incomplet, un anneau complet et un anneau incomplet, et n ≥ 2.

5. Procédé selon la revendication 4, dans lequel l'étape d'affichage des « n » commandes d'ajustement de rotateur correspondant à « n » paramètres de prise de vue sur la base du même centre de cercle comprend l'une des étapes ci-dessous consistant à :
afficher (402), sous la forme de cercles concentriques ayant le même centre de cercle mais des rayons différents, « n » commandes d'ajustement de rotateur correspondant à « n » paramètres de prise de vue ; ou
afficher, dans différentes positions de radian sur un même anneau positionné sur la base du centre de cercle, les « n » commandes d'ajustement de rotateur.

6. Procédé selon l'une quelconque des revendications 2 à 5, dans lequel l'étape d'ajustement (204) du paramètre de prise de vue selon le signal d'effleurement glissant comprend l'une des étapes ci-dessous consistant à :
agrandir le paramètre de prise de vue si le signal d'effleurement glissant est un signal de glissement dans le sens des aiguilles d'une montre, la plage d'agrandissement étant en relation de corrélation positive avec une longueur d'un trajet de glissement du signal de glissement dans le sens des aiguilles d'une montre ; et réduire le paramètre de prise de vue si le signal d'effleurement glissant est un signal de glissement dans le sens inverse des aiguilles d'une montre, la plage de réduction étant en relation de corrélation positive avec une longueur d'une trajet de glissement du signal de glissement dans le sens inverse des aiguilles d'une montre ; ou
réduire le paramètre de prise de vue si le signal d'effleurement glissant est un signal de glissement dans le sens des aiguilles d'une montre, la plage de réduction étant en relation de corrélation positive avec une longueur du trajet de glissement du signal de glissement dans le sens des aiguilles d'une montre ; et agrandir le paramètre de prise de vue si le signal d'effleurement glissant est un signal de glissement dans le sens inverse des aiguilles d'une montre, la plage d'agrandissement étant en relation de corrélation positive avec une longueur du trajet de glissement du signal de glissement dans le sens inverse des aiguilles d'une montre.

7. Procédé selon l'une quelconque des revendications 2 à 6, dans lequel l'étape d'ajustement (204) du paramètre de prise de vue selon le signal d'effleurement glissant comprend les étapes ci-dessous consistant à :
détecter si une vitesse de glissement du signal d'effleurement glissant est supérieure à une valeur de seuil prédéfinie ; et
ajuster le paramètre de prise de vue sur une valeur par défaut si la vitesse de glissement du signal d'effleurement glissant est supérieure à la valeur de seuil prédéfinie.

8. Procédé selon l'une quelconque des revendications 2 à 7, dans lequel la commande d'ajustement de rotateur comprend une identification d'échelle correspondant au paramètre de prise de vue.

9. Procédé selon la revendication 1, dans lequel le procédé comprend en outre les étapes ci-dessous consistant à :
recevoir, à l'issue d'une mise au point automatique, un signal de clic agissant sur la commande d'ajustement de glissement ; et
effectuer une prise de vue selon le paramètre de prise de vue après que le signal de clic a été reçu par un module de réception de clic.

10. Dispositif destiné à ajuster un paramètre de prise de vue, comprenant :
un module de réception de clic (520), configuré de manière à recevoir un signal de clic déclenché par un effleurement sur un cadre de visée affiché sur un écran tactile ;
un module d'affichage de commande (540), configuré de manière à afficher, en réponse audit signal de clic, une commande d'ajustement de glissement correspondant à un paramètre de prise de vue ;
un module de réception de glissement (560), configuré de manière à recevoir un signal d'effleurement glissant indicatif d'un effleurement glissant de type courbe agissant sur la commande d'ajustement de glissement ; et
un module d'ajustement de paramètre (580), configuré de manière à ajuster le paramètre de prise de vue selon le signal d'effleurement glissant, dans lequel le paramètre de prise de vue comprend au moins l'une parmi une valeur de compensation d'exposition, une valeur de balance des blancs, une valeur ISO, une valeur d'ouverture, une distance focale et une vitesse d'obturation ;
**caractérisé en ce que** :
le module d'affichage de commande (540) est configuré de manière à afficher une commande d'ajustement de glissement en prenant la position de clic comme centre de la commande d'ajustement de glissement ; et
un module de mise au point automatique (590) configuré de manière à se mettre au point automatiquement à la position de clic du signal de clic sur le cadre de visée, est en outre fourni.

11. Dispositif d'ajustement de paramètre de prise de vue selon la revendication 10, comprenant :
un processeur (802) ; et
une mémoire (804) configurée de manière à stocker des instructions exécutables par le processeur.

12. Programme informatique incluant des instructions pour exécuter les étapes d'un procédé d'ajustement de paramètre de prise de vue selon l'une quelconque des revendications 1 à 9, lorsque ledit programme est exécuté par un ordinateur du dispositif selon la revendication 10.

13. Support d'enregistrement lisible par un ordinateur et sur lequel est enregistré le programme informatique selon la revendication 12.
